# EUROPÄISCHE PATENTSCHRIFT

(11) **EP 1 473 254 B1**
(45) Veröffentlichungstag und Bekanntmachung des Hinweises auf die Patenterteilung: **21.05.2008**
(21) Anmeldenummer: 04007498.1
(22) Anmeldetag: 27.03.2004
(51) Int. Cl.: B65G 1/04

(54) **Antriebseinrichtung für eine Lagervorrichtung**
Drive device for a storage device
Système d'entraînement pour dispositif de stockage

(30) Priorität: 29.03.2003 DE 20305123 U
(43) Veröffentlichungstag der Anmeldung: 03.11.2004
(73) Patentinhaber: Megamat GmbH Büro- und Lagertechnik, 86476 Neuburg/Kammel (DE)
(72) Erfinder: Preschke, Harald, 89250 Senden (DE)
(74) Vertreter: Fiener, Josef

(56) Entgegenhaltungen:
- US-A- 3 750 804
- US-A- 4 358 239

## Beschreibung

Die Erfindung betrifft eine Antriebseinrichtung gemäß dem Oberbegriff des Anspruchs 1.

Eine Antriebseinrichtung für eine Lagervorrichtung in Form eines mechanischen Schrankes mit einer Vielzahl von Lagergutträgern, die von der Antriebseinrichtung mittels wenigstens einem Mitnehmer auf eine höhenverfahrbare Zubringerplattform verbringbar sind und zu einer Ein-/Auslageröffnung bewegbar sind, ist aus der WO 01/56 905 der Anmelderin bekannt. Hierbei ist ein mechanischer Schrank beschrieben, bei dem eine Vielzahl von kassettenartigen Lagergutträgern in zwei seitlichen Regalrahmen ein- bzw. ausschiebbar ist. Zwischen diesen beiden Stapelsäulen ist eine Zubringerplattform in Höhenrichtung verfahrbar, so dass einzelne Lagergutträger aus dem Regalrahmen entnommen werden können und zur Auslagerung einer Öffnung zugeführt werden können. Das Herausziehen der einzelnen kassettenartigen Lagergutträger erfolgt dabei mit einem Ketten- oder Riemenantrieb, der mittels eines Mitnehmers an die Vorderseite der Lagergutträger ankoppelbar ist. Weiterhin finden für derartige Vorrichtungen zum Ein- und Auslagern von Lastträgern in ein Regal bzw. aus einem Regal (auch als Extraktor bezeichnet) zunehmend Kettenantriebe Verwendung, wie sie beispielsweise in der EP 0 192 259 beschrieben sind. Hierbei sind als Antriebsstränge zwei parallel zueinander angeordnete Ketten vorgesehen, die um Umlenkräder umlaufen und dabei mittels bolzenförmiger Mitnehmer in den jeweils angewählten Lagergutträger beidseitig eingreifen. Bei dem genannten Stand der Technik ist die Antriebsvorrichtung an der höhenverfahrbaren Zubringerplattform jedoch relativ bauaufwendig, insbesondere zur Ankoppelbewegung an die Lagergutträger, da hierzu ein zusätzliches Vorschubgetriebe erforderlich ist, das zudem an jeden Lagertyp exakt angepasst werden muss.

Eine Antriebseinrichtung gemäß dem Oberbegriff des Anspruchs 1 ist aus der US 4,358,239 und aus der US 3,750,804 bekannt.

Demzufolge liegt der Erfindung die Aufgabe zugrunde, eine Antriebseinrichtung für Lagervorrichtungen zu schaffen, mit der eine einfache und variable Bauweise erreicht wird.

Diese Aufgabe wird gelöst durch eine Antriebseinrichtung gemäß den Merkmalen des Anspruches 1.

Durch die vorgeschlagene Antriebseinrichtung wird eine besonders einfache Bauweise erreicht, wobei zudem für unterschiedliche Gerätetiefen eine einfache Anpassung ohne Getriebeänderung erfolgen kann. Von besonderem Vorteil ist die Anwendung dieser Antriebseinrichtung in Lagervorrichtungen mit einer zusätzlich horizontal beweglichen Zubringerplattform zur Bedienung mehrerer Regalrahmen in der Lagervorrichtung. Weitere vorteilhafte Ausgestaltungen sind Gegenstand der Unteransprüche.

Nachfolgend wird ein Ausführungsbeispiel der Antriebseinrichtung anhand der Zeichnung näher erläutert und beschrieben. Hierbei zeigen:
- Fig. 1: eine Perspektivdarstellung einer Lagervorrichtung;
- Fig. 2: eine Schnittdarstellung der Lagervorrichtung gemäß Fig. 1;
- Fig. 3: eine vergrößerte Darstellung einer Zubringerplattform mit einer Antriebseinrichtung in Perspektivansicht in drei verschiedenen Auszugspositionen; und
- Fig. 4: eine Draufsicht auf eine Hälfte der Antriebseinrichtung gemäß Fig. 3.

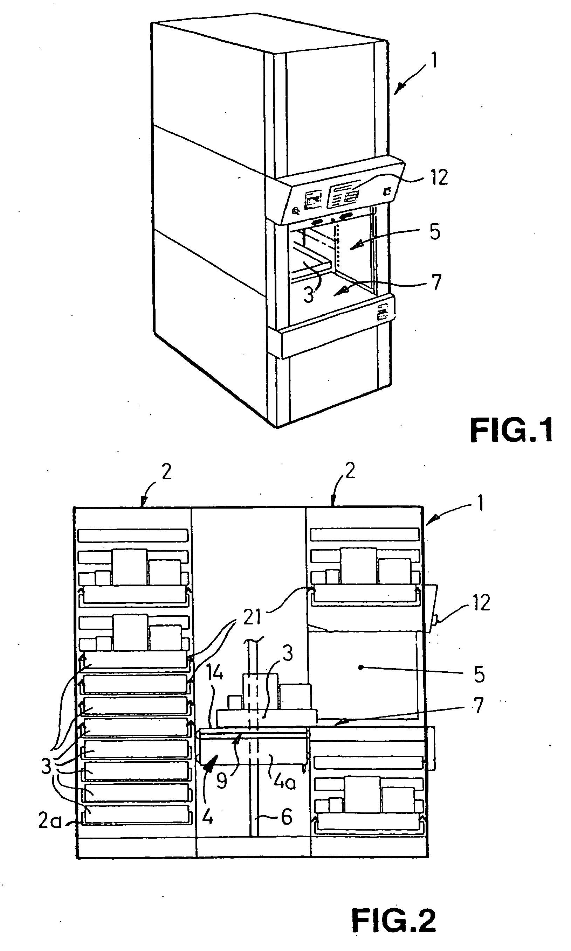

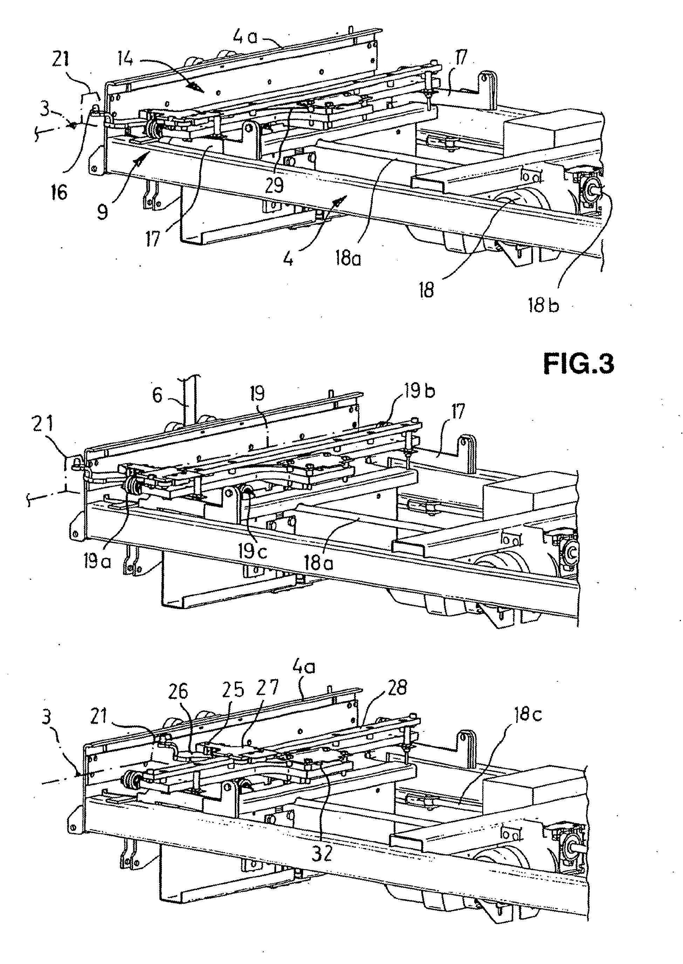

In Fig. 1 ist eine Perspektivdarstellung einer Lagervorrichtung 1 in Form eines mechanischen Schrankes gezeigt, der im wesentlichen aus zwei hintereinander angeordneten Regalrahmen 2 besteht (vgl. auch Fig. 2), in denen eine Vielzahl von flachen Lagergutträgern 3 auf seitlichen Auflagewinkeln 2a einlagerbar sind. Die Lagergutträger 3 werden hierbei durch eine Zubringerplattform 4 von einer Ein-/Auslageröffnung 5 abgeholt und zu dem jeweiligen Fach in dem Regalrahmen 2 transportiert. Die Auslagerung erfolgt dabei in umgekehrter Weise, indem der jeweilige Lagergutträger 3 von den entsprechenden Auflagewinkeln 2a an einen vorbestimmten Platz des Regalrahmens 2 gezogen wird, von der Zubringerplattform 4 dann auf die Ein-/Auslagerebene 7 der Ein-/Auslageröffnung 5 bewegt wird und dann in diese ausgeschoben wird. Die Einlagerung bzw. Auslagerung erfolgt mit einer allgemein mit 9 bezeichneten Antriebseinrichtung (vgl. Fig. 3), die entlang einer Seitenwange 4a der Zubringerplattform 4 angeordnet ist. Die Ansteuerung erfolgt dabei prozessorgesteuert mittels eines hier schematisch dargestellten Bedienfeldes 12, mit dem bestimmte Fachplätze in dem Regalrahmen 2 angewählt werden können. In der Ein-/Auslageröffnung 5 kann dabei auch ein Höhensensor vorgesehen sein, der die Höhe des einzulagernden Lagergutträgers 3 erfasst und diesem dann einen entsprechenden Platz zuweist. Hierdurch ist eine hohe Variabilität und Lagerplatznutzung in der Lagervorrichtung 1 gegeben.

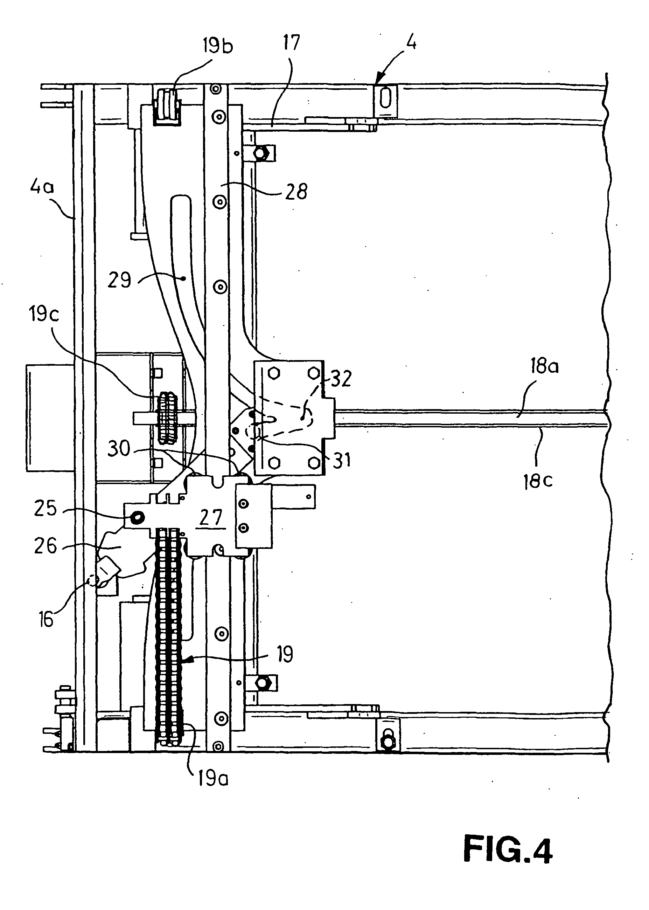

Zur Ein-/Auslagerung der jeweiligen Lagergutträger 3 sind an der Oberseite 14 der Zubringerplattform 4 als Antriebseinrichtung 9 beispielsweise Kettenantriebe 19 (vgl. Fig. 4) vorgesehen, mit denen die jeweiligen Lagergutträger 3 aus der Einlageröffnung 5 übernommen werden können bzw. auf diese ausgeschoben werden können. Um hierbei mit dem auf der Ein-/Auslagerebene 7 abgestellten jeweiligen Lagergutträger 3 in Eingriff gehen zu können, ist ein vorderes bzw. rückseitiges Eingriffsprofil 21 (nur an einigen Lagergutträgern 3 durch je einen Haken angedeutet; vgl. auch Fig. 3) für die Kettenantriebe 19 vorgesehen. Neuerungsgemäß greift in dieses Eingriffsprofil 21 am Endbereich der Lagergutträger 3 der Kettenantrieb 19 mit den Mitnehmern 16 (vgl. Fig. 3) von unten her ein. Diese Eingriffsprofile 21 können durch jegliche form- oder kraftschlüssige Verbindung gebildet sein, sind bevorzugt jedoch durch jeweils eine nach unten offene Bohrung am seitlichen Eckbereich der Lagergutträger 3 gebildet.

In Fig. 2 ist eine Schnittdarstellung der Lagereinrichtung 1 gemäß Fig. 1 gezeigt, wobei insbesondere die Anordnung der beiden Regalrahmen 2 und die Zubringerplattform 4 ersichtlich sind, mit der nach dem Einschieben eines (hier beladenen) Lagergutträgers 3 von Hand, mittels Roboter oder eines sonstigen Regalbediengerätes, die Lagergutträger 3 an den zugewiesenen Lagerplatz bewegbar sind. Hierzu sind die Seitenwangen 4a der Zubringerplattform 4 an einer über die gesamte Höhe der Lagereinrichtung 1 verlaufenden Vertikalführung 6 geführt, die auch in Fig. 3, Mitte im Umgriff von Führungsrollen gezeigt ist. Die Einschub- bzw.

Ausschubbewegung in bzw. aus den Regalrahmen 2 erfolgt dabei entlang den Seitenwangen 4a, also in Fig. 2 entlang der Zeichenebene.

Wie in Fig. 3 vergrößert dargestellt, ist hierbei das Eingriffsprofil 21 eines Lagergutträgers 3 in Strichpunktlinien angedeutet, wobei wenigstens ein bolzenförmiger Mitnehmer 16 in das Eingriffsprofil 21 von unten her eingreift. Durch eine zunächst abgesenkte Wippe 17 wird dabei der Mitnehmer 16 nach oben angehoben und gelangt damit von unten her in Art einer Auftauchbewegung in Kontakt mit dem Eingriffsprofil 21, das bevorzugt als Bohrung oder auch als Schlitz ausgeführt ist. Mit dem angehobenen Mitnehmer 16 und der entlang der Seitenwange 4a angeordneten Antriebseinrichtung 9 kann somit der Lagergutträger 3 auf die Oberseite 14 der Zubringerplattform 4 gezogen werden. Der Antrieb des Mitnehmers 16 entlang der Seitenwange 4a kann dabei auch durch einen Riemen- oder Seilantrieb anstatt eines Kettenantriebes 19 (vgl. Fig. 4) erfolgen. Wesentlich ist hierbei auch, dass der hier beispielhaft dargestellte Kettenantrieb 19 zur Ein-/Auslagerbewegung von einem zentralen Motor 18 angetrieben werden kann, der etwa im Zentrum der Zubringerplattform 4 angeordnet ist. Über zwei vom Motor 18 über ein Getriebe abzweigende Wellen 18a und 18b wird somit der Kettenantrieb 19 angetrieben, der gemäß der Fig. 3, Mitte über drei Kettenräder 19a, 19b und 19c umläuft, wobei zur deutlicheren Darstellung die Kette (vgl. Fig. 4) hier weggelassen wurde. Das mittlere Kettenrad 19c wird durch die Welle 18a (bzw. spiegelbildlich dazu von der Welle 18b an der anderen Seitenwange 4a der Zubringerplattform 4) angetrieben. Die Hubbewegung der Wippe 17 kann dabei über einen Exzenterantrieb auch von einer Schubstange oder Welle 18c abgeleitet werden, die in Fig. 3 aus Gründen der Übersicht seitlich entlang des Rahmens eingezeichnet ist. Bevorzugt verläuft diese weitere Welle 18c parallel zur Welle 18a, wie dies in Fig. 4 dargestellt ist. Es kann jedoch auch ein separater Spindelmotor, Pneumatikantrieb oder Hydraulikantrieb zum Anheben der Wippe 17 und damit dem Eingreifen des Mitnehmers 16 in das Eingriffsprofil 21 vorgesehen sein.

In Fig. 4 ist eine Draufsicht auf die hier linke Hälfte der Zubringerplattform 4 dargestellt, die auch in Fig. 3, unten in der entsprechenden Position gezeigt ist. Der Mitnehmer 16 befindet sich dabei in einer bereits teilweise erfolgten Extraktions- bzw.

Auszugsposition, wie dies auch in Fig. 3, unten mit dem teilweise nach innen bewegten Mitnehmer 16, also mit etwa einem Drittel der Auszugsbewegung in Breitenerstreckung der Zubringerplattform 4 entlang der Seitenwange 4a, dargestellt ist. Hierbei ist in der Draufsicht gemäß Fig. 4 der Mitnehmer 16 unterhalb der oben abgekanteten Seitenwange 4a der Zubringerplattform 4 teilweise verdeckt dargestellt. Hierdurch wird auch erreicht, dass der extrahierte Lagergutträger 3 bei der vollständigen Auszugsposition auf der Zubringerplattform 4 auch nach oben hin arretiert ist. Dies kann bei sehr schnellen Ein-/Auslagerbewegungen von Bedeutung sein.

Der bolzenförmige Mitnehmer 16 selbst ist an einem Kragarm 26 gelagert, der über einen Bolzen 25 mit einem Schlitten 27 gekoppelt ist. Der Schlitten 27 wird an Führungsrollen 30 vom Kettenantrieb 19 entlang einer quer verlaufenden Führungsschiene 28 bewegt, die parallel zur Seitenwange 4a ausgerichtet ist. Der Kragarm 26 für den Mitnehmer 16 verläuft hierbei mit einem Kulissenstein 31 in einer geschwungenen, V-förmigen Führungskulisse 29, so dass bei einer Weiterbewegung des Kragarmes 26 zur Mitte hin dieser mit seinem Kulissenstein 31 an einem Umkehrpunkt 32 angelangt, wobei der Kragarm 26 parallel zur Antriebswelle 18a ist. Unter Weiterbewegung (gegenüber der hier gezeigten Position) mit dem vom Kettenantrieb 19 angetriebenen Schlitten 27 entlang der Führungsschiene 28 wird somit der Kragarm 26 unter exakter Führung zum oberen Teil der Zubringerplattform 4 hin verlagert und somit den Lagergutträger 3 vollständig auf die Oberseite 14 der Zubringerplattform 4 ziehen. Dabei ist der Lagergutträger 3 formschlüssig auf der Zubringerplattform 4 gehaltert. Erst nach Absinken der Wippe 17 würde somit der Mitnehmer 16 außer Eingriff gelangen, beispielsweise damit der Lagergutträger 3 wieder ein- bzw. ausgelagert werden kann.

Die Auslagerung erfolgt ebenfalls durch Antrieb der Riemen- oder Kettenantriebe 19, die um drei Umlenkräder 19a, 19b und 19c umlaufen, wobei das mittige von der Welle 18a angetrieben wird, bis die an entgegengesetzten Seitenwangen 4a angeordneten Mitnehmer 16 wieder durch Abtauchen aus dem Eingriffsprofil 21 außer Eingriff gelangen. Der Eingriff in die Eingriffsprofile 21 (die schlitz- oder lochartig gestaltet sein können) an den Lagergutträgern 3 in Vertikalrichtung kann auch durch abstehende Bolzen oder abkragende Hebel erfolgen, die jeweils bei jeder Ein-/Auslagerbewegung der Lagergutträger 3 wirksam sind. Insgesamt ergibt sich somit eine Antriebseinrichtung für Lagervorrichtungen mit einer einfachen, kompakten Bauweise, wobei ein zuverlässiger und rascher Betrieb des mechanischen Schrankes bei der Ein-/Auslagerung erreicht wird.

## Patentansprüche

1. Antriebseinrichtung für eine Lagervorrichtung (1) in Form eines mechanischen Schrankes mit einer Vielzahl von Lagergutträgern (3), die von der Antriebseinrichtung (9) mittels wenigstens einem Mitnehmer (16) auf eine höhenverfahrbare Zubringerplattform (4) verbringbar sind und zu einer Ein-/Auslageröffnung (5) bewegbar sind, wobei der Mitnehmer (16) an einem Kragarm (26) befestigt ist, der über einen Kulissenstein (31) in einer Führungskulisse (29) geführt ist,
**dadurch gekennzeichnet, dass**
der Kragarm (26) mit einem Schlitten (27) gekoppelt ist, der an einer Führungsschiene (28) entlang einer Seitenwange (4a) der Zubringerplattform (4) geführt ist, und die Führungskulisse (29) über die Breitenerstreckung der Zubringerplattform (4) geschwungen V-förmig mit einem Umkehrpunkt (32) verläuft,
wobei die Kopplung des Kragarms (26) mit dem Schlitten (27) zwischen dem Umkehrpunkt (32) und dem Mitnehmer (16) erfolgt und
wobei der Umkehrpunkt (32) der am weitesten von der Seitenwange (4a) entfernte Punkt der Führungskulisse (29) ist.

2. Antriebseinrichtung nach Anspruch 1, **dadurch gekennzeichnet, dass** die Führungskulisse (29) an einer höhenverschwenkbaren Wippe (17) angeordnet ist, die an der Zubringerplattform (4) beweglich gelagert ist.

3. Antriebseinrichtung nach Anspruch 1 oder 2, **dadurch gekennzeichnet, dass** die Zubringerplattform (4) etwa mittig einen Motor (18) aufweist, von dem aus zwei Wellen (18a, 18b) zu zwei spiegelbildlich an den Seitenwangen (4a) angeordneten Antriebseinrichtungen (9) führen.

4. Antriebseinrichtung nach einem der Ansprüche 1 bis 3, **dadurch gekennzeichnet, dass** die Antriebseinrichtung (9) jeweils einen Ketten- oder Riemenantrieb (19) aufweist, der an der Oberseite (14) der Zubringerplattform (4) angeordnet ist.

5. Antriebseinrichtung nach einem der Ansprüche 1 bis 4, **dadurch gekennzeichnet, dass** die Lagergutträger (3) Eingriffsprofile (21) aufweisen, in die der Mitnehmer (16) von unten her eingreift.

6. Antriebseinrichtung nach Anspruch 5, **dadurch gekennzeichnet, dass** die Eingriffsprofile (21) als Bohrungen im seitlichen Eckbereich des Lagergutträgers (3) ausgeführt sind.

7. Antriebseinrichtung nach einem der Ansprüche 2 bis 6, **dadurch gekennzeichnet, dass** die Höhenverschwenkung der Wippe (17) über eine Exzenterscheibe steuerbar ist, die von einer parallel zu den Wellen (18a bzw. 18b) verlaufenden Welle (18c) angetrieben ist.

8. Antriebseinrichtung nach einem der Ansprüche 1 bis 7, **dadurch gekennzeichnet, dass** der Kragarm (26) zwischen der Führungsschiene (28) an der Oberseite (14) und der weiter unten angeordneten Führungskulisse (29) querverfahrbar angeordnet ist.

9. Antriebseinrichtung nach einem der Ansprüche 1 bis 8, **dadurch gekennzeichnet, dass** der Kragarm (26) - in Seitenansicht gesehen - in Horizontalebene gekröpft ist.

## Claims

1. A drive system for a storage device (1) in the form of a mechanical cabinet having a plurality of stored goods carriers (3) which the drive system (9) can pass onto a vertically displaceable feeder platform (4) by means of at least one entrainment means (16) and which are movable to an opening (5) for stocking/retrieving of stock, wherein the entrainment means (16) is fastened to a cantilever (26) which is guided in a guiding crank (29) via a sliding block (31),
**characterized in that**
the cantilever (26) is coupled with a slide (27) which is guided at a guide rail (28) along a side wall (4a) of the feeder platform (4), and
the guiding crank (29) extends in a curved V-shape with a reversal point (32) across the lateral extension of the feeder platform (4),
wherein the coupling of the cantilever (26) and the slide (27) is effected between the reversal point (32) and the entrainment means (16) and
wherein the reversal point (32) of the guiding crank (29) is the point farthest from the side wall (4a).

2. A drive system according to claim 1, **characterized in that** the guiding crank (29) is arranged at a lifting means (17) that can be vertically deviated and is mounted free to move at the feeder platform (4).

3. A drive system according to claim 1 or 2, **characterized in that** the feeder platform (4) has approximately centred a motor (18), from which two shafts (18a, 18b) lead to two drive systems (9) which are inversely arranged at the side walls (4a).

4. A drive system according to any of claims 1 to 3, **characterized in that** the drive system (9) respectively has a chain or belt drive (19) arranged at the upper side (14) of the feeder platform (4).

5. A drive system according to any of claims 1 to 4, **characterized in that** the stored goods carriers (3) have engagement profiles (21) into which the entrainment means (16) engages from the bottom.

6. A drive system according to claim 5, **characterized in that** the engagement profiles (21) are implemented as holes in the lateral corner region of the stored goods carriers (3).

7. A drive system according to any of claims 2 to 6, **characterized in that** the vertical deviation of the lifting means (17) is controllable via an eccentric disk which is driven by a shaft (18c) extending in parallel to the shafts (18a and 18b, respectively).

8. A drive system according to any of claims 1 to 7, **characterized in that** the cantilever (26) is arranged laterally displaceable between the guide rail (28) at the upper side (14) and the guiding crank (29) arranged beneath.

9. A drive system according to any of claims 1 to 8, **characterized in that** the cantilever (26) - seen in side view - is cranked in the horizontal plane.

## Revendications

1. Système d'entraînement pour un dispositif de stockage (1) se présentant sous la forme d'une armoire mécanique, comprenant un grand nombre de supports de stockage (3) que le système d'entraînement (9) peut déplacer, au moyen d'au moins un toc d'entraînement (16), sur une plate-forme d'amenée (4) mobile en hauteur et acheminer vers une ouverture de chargement/déchargement (5), le toc d'entraînement (16) étant fixé à un bras en porte-à-faux (26) guidé dans une coulisse (29) par le biais d'un coulisseau (31), **caractérisé en ce que** le bras en porte-à-faux (26) est accouplé à un chariot (27) qui est guidé sur un rail de guidage (28) le long d'une joue latérale (4a) de la plate-forme d'amenée (4), et **en ce que** la coulisse (29) s'étend courbé en forme de V, avec un point d'inversion (32), sur la largeur de la plate-forme d'amenée (4), le bras en porte-à-faux (26) étant accouplé au chariot (27) entre le point d'inversion (32) et le toc d'entraînement (16), et le point d'inversion (32) constituant le point de la coulisse (29) le plus éloigné de la joue latérale (4a).

2. Système d'entraînement selon la revendication 1, **caractérisé en ce que** la coulisse (29) est placée sur une bascule (17) pouvant pivoter verticalement qui est montée de façon mobile sur la plate-forme d'amenée (4).

3. Système d'entraînement selon la revendication 1 ou 2, **caractérisé en ce que** la plate-forme d'amenée (4) présente approximativement au milieu un moteur (18) dont partent deux arbres (18a, 18b) menant à deux systèmes d'entraînement (9) disposés symétriquement sur les joues latérales (4a).

4. Système d'entraînement selon l'une des revendications 1 à 3, **caractérisé en ce que** le système d'entraînement (9) comprend un entraînement par chaîne ou par courroie (19) qui est disposé sur le dessus (14) de la plate-forme d'amenée (4).

5. Système d'entraînement selon l'une des revendications 1 à 4, **caractérisé en ce que** les supports de stockage (3) présentent des profils de prise (21) dans lesquels le toc d'entraînement (16) s'engage par le dessous.

6. Système d'entraînement selon la revendication 5, **caractérisé en ce que** les profils de prise (21) sont réalisés sous forme de perçages dans la zone de coin latérale du support de stockage (3).

7. Système d'entraînement selon l'une des revendications 2 à 6, **caractérisé en ce que** le pivotement en hauteur de la bascule (17) peut être commandé par le biais d'un disque excentrique entraîné par un arbre (18c) s'étendant parallèlement aux arbres (18a et 18b).

8. Système d'entraînement selon l'une des revendications 1 à 7, **caractérisé en ce que** le bras en porte-à-faux (26) est disposé de manière à pouvoir se déplacer transversalement entre la glissière de guidage (28) sur le dessus (14) et la coulisse (29) disposée plus bas.

9. Système d'entraînement selon l'une des revendications 1 à 8, **caractérisé en ce que**, vu de côté, le bras en porte-à-faux (26) est coudé dans le plan horizontal.
